# EUROPÄISCHE PATENTSCHRIFT

(11) **EP 3 081 463 B1**
(45) Veröffentlichungstag und Bekanntmachung des Hinweises auf die Patenterteilung: **25.07.2018**
(21) Anmeldenummer: 16164089.1
(22) Anmeldetag: 06.04.2016
(51) Int. Cl.: B62D 59/04

(54) **ANTRIEBSROLLE FÜR EINEN RANGIERANTRIEB UND VERFAHREN ZUR HERSTELLUNG DER ANTRIEBSROLLE**
DRIVE ROLLER FOR A RANGING DRIVE AND METHOD FOR THE PREPARATION OF THE DRIVE ROLLER
ROUE D'ENTRAINEMENT POUR UN ENTRAINEMENT DE RANGEMENT ET PROCEDE DE PRODUCTION D'UN ROUE D'ENTRAINEMENT

(30) Priorität: 14.04.2015 DE 102015105697
(43) Veröffentlichungstag der Anmeldung: 19.10.2016
(73) Patentinhaber: Truma Gerätetechnik GmbH & Co. KG, 85640 Putzbrunn (DE)
(72) Erfinder: Grube, Uwe, 85368 Moosburg (DE); Möhring, Mario, 85408 Gammelsdorf (DE)
(74) Vertreter: Prinz & Partner mbB

(56) Entgegenhaltungen:
- EP-A1- 1 702 835
- EP-A1- 1 714 858
- DE-A1- 2 642 380

## Beschreibung

Die Erfindung betrifft eine Antriebsrolle für einen Rangierantrieb gemäß dem Oberbegriff des Anspruchs 1 sowie ein Verfahren zur Herstellung einer Antriebsrolle für einen Rangierantrieb.

Rangierantriebe des Typs, auf den sich die Erfindung bezieht, können insbesondere dazu verwendet werden, einen Anhänger (beispielsweise einen Wohnwagen) dann zu bewegen und zu rangieren, wenn dieser nicht mit einer Zugmaschine verbunden ist. Der Rangierantrieb weist dabei mehrere Antriebseinheiten auf, die auf der einen und der anderen Seite des Anhängers angeordnet sind und jeweils an einem Rad des Anhängers angreifen können.

Jede Antriebseinheit enthält üblicherweise einen Elektromotor und eine Antriebsrolle, die vom Elektromotor in Drehung versetzt werden kann. Die Antriebsrolle wird gegen die Lauffläche des entsprechenden Rades beaufschlagt, sodass sie dort reibschlüssig angreift und ein Drehmoment vom Motor (gegebenenfalls über ein zwischengeschaltetes Getriebe) auf den Reifen übertragen kann.

Die Antriebsrollen sind meist Metall-Druckgussteile bzw. mechanisch bearbeitete Strangpressprofile oder stabile Kunststoffe. Aufgrund der zur Fertigung der Antriebsrollen notwendigen Druckguss- bzw. Spritzgussformen oder durch das spanabhebende Fertigungsverfahren ist die Herstellung teuer und wenig flexibel.

Die EP 1 702 835 A1, die den nächstkommenden Stand der Technik darstellt, zeigt eine Antriebsrolle, die aus einem Grundkörper besteht, der ein Mantelteil bildet und als Strangpreßprofilteil hergestellt ist, und einer Nabe, die separat hergestellt und am Grundkörper angebracht wird.

Aus der EP 1 714 858 A1 ist eine Antriebsrolle gemäß dem Oberbegriff des Anspruchs 1 bekannt. Die Aufgabe der Erfindung besteht darin, eine Antriebsrolle und ein Verfahren zur Herstellung einer Antriebsrolle zu schaffen, mit denen geringere Kosten und eine höhere Flexibilität erreicht werden.

Zur Lösung dieser Aufgabe ist erfindungsgemäß bei einer Antriebsrolle der eingangs genannten Art vorgesehen, dass der Kern ein Strangpressprofilteil ist und dass der Kern eine axiale Länge hat, die mindestens 20 % kürzer ist als die Länge des Mantelteils. > Die Erfindung beruht auf dem Grundgedanken, die Antriebsrolle als Verbundbauteil aus mindestens zwei Teilen herzustellen, nämlich dem Mantelteil und dem Kern. Hierdurch kann beispielsweise ein und derselbe Kern verwendet werden, der mit unterschiedlichen Mantelteilen versehen wird, beispielsweise um unterschiedliche Durchmesser oder Breiten der Antriebsrolle zu erzielen. Hierdurch ergibt sich eine höhere Flexibilität. Durch die geringere Länge des Kerns ergibt sich abgesehen von Material- und Gewichtseinsparungen der Vorteil, dass aufgrund des kurzen Kerns ein Teil des Innenvolumens des Mantelteils frei bleibt. Dieses kann dazu verwendet werden, eine Lagerung für die Antriebsrolle so anzuordnen, dass das am weitesten außen liegende Lager nahe der Mitte der Antriebsrolle angeordnet werden kann. Hieraus ergeben sich ein kurzer Hebelarm und daraus resultierend geringe Biegebelastungen der Welle, auf der die Antriebsrolle angeordnet ist.

Zur Lösung der oben genannten Aufgabe ist erfindungsgemäß auch ein Verfahren zur Herstellung einer Antriebsrolle für einen Rangierantrieb vorgesehen, wobei die folgenden Schritte ausgeführt werden: Zunächst wird ein hohlzylindrisches Strangpressprofil abgelängt, sodass ein Mantelteil der Antriebsrolle erhalten wird. Dann wird in das Innere des Mantelteils ein Kern so eingebracht, dass er drehfest mit dem Mantelteil verbunden ist. Über den Grundgedanken eines Verbundbauteils hinaus basiert das erfindungsgemäße Verfahren darauf, das Mantelteil durch einfaches Abschneiden eines ausreichend langen Teils von einem Strangpressprofil herzustellen. Ein Strangpressprofil kann kostengünstig mit der jeweils gewünschten Geometrie hergestellt werden, so dass sich insgesamt deutlich geringere Herstellungskosten ergeben als bei einem Gießverfahren.

Vorzugsweise bestehen sowohl das Mantelteil und/oder der Kern aus einer Aluminiumlegierung. Hierdurch ergibt sich ein geringes Gewicht der Antriebsrolle.

Es ist auch möglich, für das Mantelteil und/oder den Kern ein Kunststoffmaterial mit ausreichender Festigkeit zu verwenden.

Weiterhin ist möglich, dass die Antriebsrolle ein Kompositbauteil aus zwei Materialien ist, beispielsweise mit einem Kern aus einer Metalllegierung (insbesondere einer Aluminiumlegierung) und einem Mantel aus einem anderen Material, beispielsweise aus Kunststoff.

Gemäß einer Ausgestaltung der Erfindung ist vorgesehen, dass das Mantelteil auf seinem Außenumfang mit einer Profilierung versehen ist. Mit einer solchen Profilierung kann der Reibeingriff zwischen der Antriebsrolle und dem Reifen des Anhängers verbessert werden.

Gemäß einer Ausgestaltung der Erfindung ist vorgesehen, dass der Kern auf seinem Außenumfang mit einem Verbindungsprofil versehen ist. Das Verbindungsprofil erhöht das zwischen dem Kern und der Mantelrolle übertragbare Drehmoment.

Besonders bevorzugt beträgt die Länge des Kerns weniger als 50 % der Länge des Mantelteils. Hierdurch ergeben sich weitere Material- und Gewichtseinsparungen.

Hierbei ist es besonders vorteilhaft, wenn der Kern exzentrisch innerhalb des Mantelteils angeordnet ist, also soweit wie möglich zu einer Seite verschoben. Beträgt beispielsweise die Länge des Kerns lediglich 50 % der Länge des Mantelteils, kann das am weitesten innerhalb des Mantelteils liegende Lager nahezu in der Mitte der Antriebsrolle angeordnet werden. Falls der Kern noch kürzer ist, kann das Lager möglicherweise sogar genau mittig in der Antriebsrolle angeordnet werden.

Da das Mantelteil separat vom Kern hergestellt wird, kann es zumindest abschnittsweise eloxiert werden. Abgesehen von optischen Gesichtspunkten lässt sich auf diese Weise auch eine gewünschte Korrosionsfestigkeit erreichen.

Um den Kern mit dem Mantelteil zu verbinden, kann vorgesehen sein, dass der Kern in das Mantelteil eingepresst wird und solche Abmessungen relativ zum Inneren des Mantelteils hat, dass sich eine Presspassung ergibt. Mit einer Presspassung können die vom Rangierantrieb auf den Reifen ausgeübten Drehmomente zuverlässig übertragen werden.

Es kann auch vorgesehen sein, dass das Mantelteil erwärmt und anschließend der Kern in das Innere des Mantelteils eingebracht wird. Auch mit einem auf den Kern aufgeschrumpften Mantelteil lassen sich die notwendigen Drehmomente zuverlässig übertragen.

Die Erfindung wird nachfolgend anhand verschiedener Ausführungsformen beschrieben, die in den beigefügten Zeichnungen dargestellt sind. In diesen zeigen:
- Figur 1 schematisch einen Rangierantrieb;
- Figur 2 in einem schematischen Schnitt eine erfindungsgemäße Antriebsrolle;
- Figur 3 in einer schematischen perspektivischen Ansicht eine Antriebsrolle gemäß einer ersten Ausführungsform;
- Figur 4 in einer schematischen perspektivischen Ansicht eine Antriebsrolle gemäß einer zweiten Ausführungsform;
- Figur 5 in einer schematischen Schnittansicht eine Antriebsrolle angebracht an einem Rangierantrieb; und
- Figur 6 verschiedene Schritte der Herstellung einer erfindungsgemäßen Antriebsrolle.

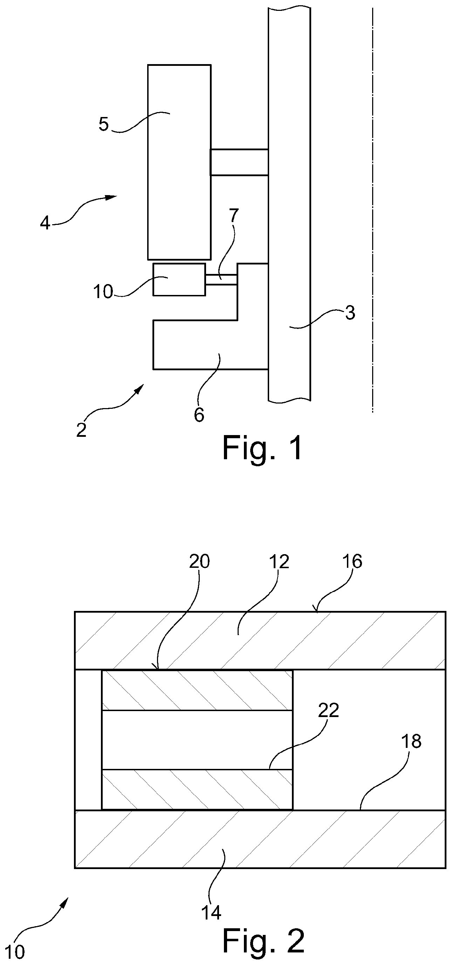

In Figur 1 ist schematisch ein Rangierantrieb 2 gezeigt, der an einem Anhänger angebracht ist, von dem hier eine Längstraverse 3 zu sehen ist. An der Längstraverse 3 ist ein Rad 4 gelagert, das einen Reifen mit einer Lauffläche 5 aufweist.

Der Rangierantrieb weist eine Antriebseinheit 6 auf, die üblicherweise einen (hier nicht dargestellten) Elektromotor enthält. Dieser ist über ein Getriebe und eine Antriebswelle 7 mit einer Antriebsrolle 10 verbunden. Die Antriebsrolle 10 kann an der Lauffläche 5 des Rades 4 angreifen.

Die Antriebsrolle 10 (siehe auch Figur 2) ist ein Verbundbauteil, das aus einem Mantelteil 12 und einem darin angeordneten Kern 14 besteht.

Das Mantelteil 12 ist ein Strangpressprofilteil, also erhalten durch Abschneiden eines Teils mit einer vorbestimmten Länge von einem Strangpressprofil. Es ist hier im weitesten Sinne ein Hohlzylinder, sodass es einen Außenumfang 16 aufweist, mit dem es an der Lauffläche 5 des Rades 4 angreift, sowie einem Innenumfang 18, über den es mit dem Kern 14 in Eingriff steht.

Der Kern 14 ist ebenfalls ein Strangpressprofilteil und ist ebenfalls im weitesten Sinne ein Hohlzylinder. Der Außenumfang 20 des Kerns 14 wirkt mit dem Innenumfang 18 des Mantelteils 12 zusammen, und der Innenumfang 22 des Kerns 14 wirkt mit der Antriebswelle 7 zusammen.

Sowohl das Mantelteil 12 als auch der Kern 14 bestehen vorzugsweise aus einer Aluminiumlegierung.

Wie in Figur 2 zu sehen ist, ist die axiale Länge des Mantelteils 12 deutlich größer als die axiale Länge des Kerns 14. Der Kern 14 hat dabei vorzugsweise eine Länge, die kleiner als 50 % der Länger des Mantelteils 12 ist. In einem Ausführungsbeispiel kann das Mantelteil eine Länge von 120 bis 130 mm haben, während der Kern eine Länge von 50 mm hat.

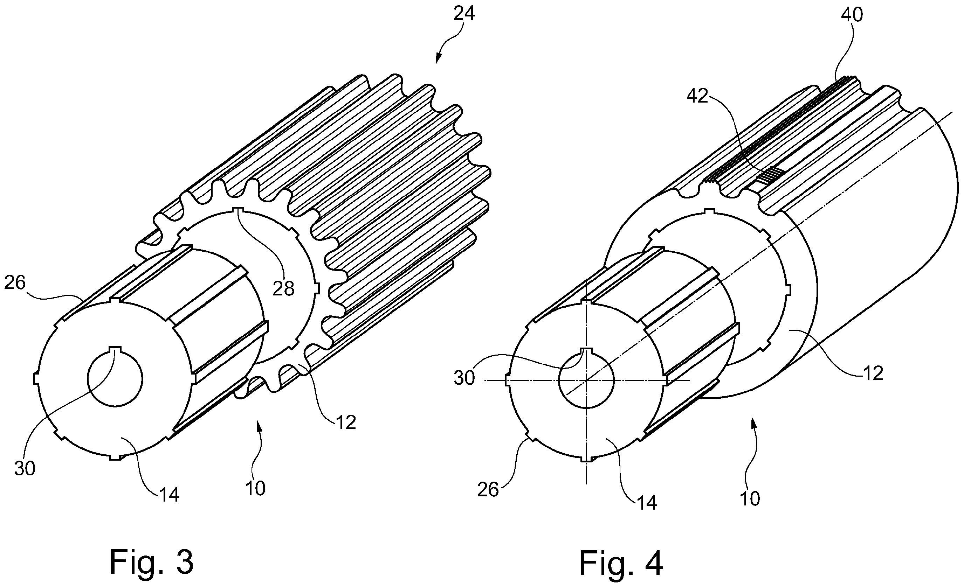

Wie in dem Ausführungsbeispiel von Figur 3 zu sehen ist, kann das Mantelteil 12 auf seinem Außenumfang mit einer Profilierung 24 versehen sein, die hier als Abfolge von Erhöhungen und Vertiefungen ausgebildet ist. Mit einer solchen Profilierung kann der Reibeingriff mit der Lauffläche 5 des Rades 4 des Anhängers verbessert werden. Auf dem Außenumfang des Kerns 14 ist ein Verbindungsprofil 26 vorgesehen, das hier durch mehrere im Abstand voneinander angeordnete, sich in Längsrichtung erstreckende Stege oder Leisten gebildet ist. Diese greifen in komplementäre Nuten 28 ein, die im Innenumfang 18 des Mantelteils 12 vorgesehen sind. Auf diese Weise ist eine formschlüssige Verbindung zwischen dem Kern 14 und dem Mantelteil 12 gewährleistet.

Der Kern 14 weist auf seinem Innenumfang eine Mitnahmenut 30 auf, in die ein Keil oder ähnliches Drehmomentübertragungselement eingreifen kann, das in einer komplementären Aufnahme der Antriebswelle 7 sitzt. Die Gestaltung ist insbesondere im Hinblick darauf ausgelegt, dass die bei der Drehmomentübertragung wirkenden Kontaktkräfte aufgrund des geringen Hebelarms recht hoch sind.

Insgesamt kann somit ein Drehmoment von der Antriebswelle 7 zur Lauffläche 5 über die Mitnahmenut 30, das Verbindungsprofil 26, die Nuten 28 und die Profilierung 24 des Mantelteils 12 erfolgen.

Da sich alle Profilierungen, Verbindungsprofile, Mitnahmenuten, Stege, etc. in Längsrichtung erstrecken, können sie mit geringem Aufwand dadurch hergestellt werden, dass einmalig die zur Herstellung des Strangpressprofils verwendeten Matrizen mit einer geeigneten Geometrie hergestellt werden.

In Figur 4 ist eine zweite Ausführungsform der Antriebsrolle 10 gezeigt. Es wird hier derselbe Kern wie bei der in Figur 3 gezeigten ersten Ausführungsform verwendet.

Auf den Kern 14 ist allerdings ein Mantelteil 12 aufgebracht, das sich hinsichtlich der Profilierung 24 am Außenumfang vom aus Figur 3 bekannten Mantelteil 12 unterscheidet.

Die Profilierung 24 ist bei der Ausführungsform von Figur 4 "kantiger" ausgeführt als bei dem Mantelteil 12 von Figur 3. Weiterhin ist die Stirnseite jeder Erhöhung mit mehreren parallel angeordneten, schmalen Rillen 40 versehen. Hierdurch wird der Reibeingriff mit der Lauffläche 5 weiter verbessert.

Zusätzlich zu den Rillen 40 oder anstelle dieser Rillen kann auch eine Riffelung 42 vorgesehen sein, die schräg zur Rotationsachse der Antriebsrolle 10 ausgerichtet ist. Eine solche Riffelung 42 kann entweder nachträglich in das Mantelteil 12 eingebracht werden oder auch schon im Strangpressvorgang, wenn Teile der Matrize beim Ziehen in Umfangsrichtung verstellt werden.

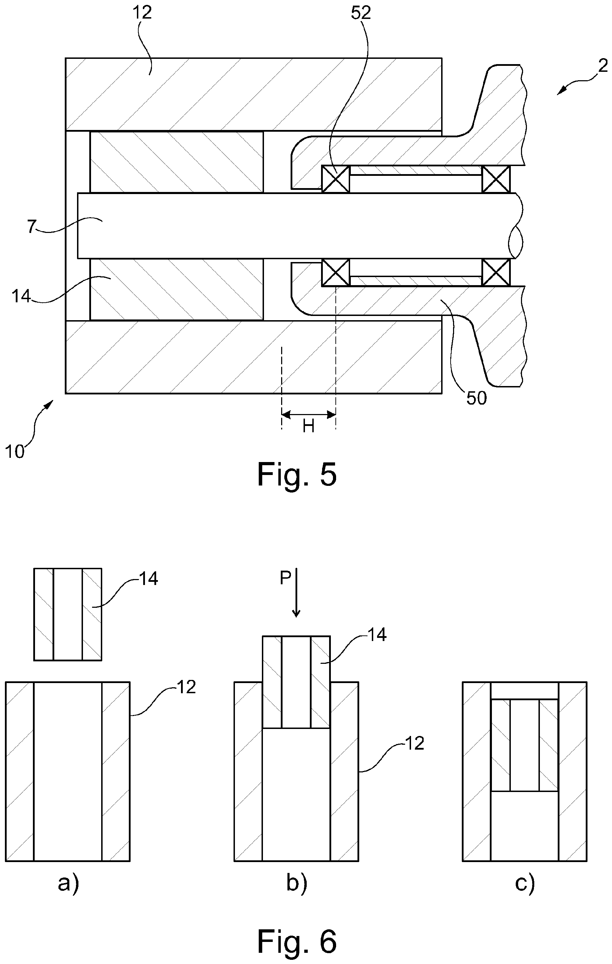

In Figur 5 ist schematisch die Antriebsrolle 10 gezeigt, wie sie auf der Antriebswelle 7 der Antriebsvorrichtung 6 angebracht ist.

Da der Kern 14 exzentrisch und weitestgehend vollständig zu einer Seite verschoben innerhalb des Mantelteils 12 angeordnet ist, kann sich ein Lagerdom 50 der Antriebsvorrichtung 6 bis weit in das Innere des Mantelteils 12 hinein erstrecken. Dies ermöglicht es, ein Wälzlager 52, mit dem die Antriebswelle 7 in der Antriebsvorrichtung 6 und insbesondere innerhalb des Lagerdoms 50 gelagert ist, tief im Inneren der Antriebsrolle 10 anzuordnen, sodass der Hebelarm H zwischen der Mitte der Antriebsrolle und dem Wälzlager 52 sehr klein ist.

In Figur 6 ist schematisch das Verfahren zur Herstellung der Antriebsrolle 10 gezeigt. Zunächst werden das Mantelteil 12 und der Kern 14 hergestellt, indem ein Strangpressprofil in der gewünschten Weise abgelängt wird.

Falls gewünscht, kann das Mantelteil 12 eloxiert werden, um bestimmte Korrosionsanforderungen zu erfüllen oder der Antriebsrolle eine bestimmte Farbe zu geben.

Dann wird der Kern 14 in das Innere des Mantelteils 12 eingebracht. Dies kann entweder dadurch geschehen, dass der Kern 14 in axialer Richtung in das Mantelteil 12 eingepresst wird (siehe den Pfeil P in Figur 6b). Die Abmessungen des Außenumfangs 20 des Kerns 14 relativ zu den Abmessungen des Innenumfangs 18 des Mantelteils 12 sind dabei so bemessen, dass sich eine Presspassung ergibt.

Alternativ kann auch vorgesehen sein, dass das Mantelteil 12 erwärmt wird, sodass sich aufgrund der Wärmedehnung dann der Kern 14 entweder frei oder unter geringer Krafteinwirkung bis zur gewünschten axialen Position in das Innere des Mantelteils 12 einschieben lässt. Sobald das Mantelteil 12 abgekühlt ist, ist es fest auf den Kern 14 aufgeschrumpft.

Die mechanische Verbindung zwischen dem Kern 14 und dem Mantelteil 12 gewährleistet, dass das nötige Antriebsdrehmoment vom Kern auf das Mantelteil übertragen werden kann. Weiterhin ist die gewünschte Festigkeit in axialer Richtung gewährleistet, die verhindert, dass das Mantelteil 12 in axialer Richtung auf dem Kern 14 wandert.

## Patentansprüche

1. Antriebsrolle (10) für einen Rangierantrieb (2), mit einem hohlzylindrischen Mantelteil (12) und einem Kern (14), der im Inneren des Mantelteils (12) angeordnet und mit diesem drehfest verbunden ist, wobei das Mantelteil (12) ein Strangpressprofilteil ist, **dadurch gekennzeichnet, dass** der Kern (14) ein Strangpressprofilteil ist und dass der Kern (14) eine axiale Länge hat, die mindestens 20% kürzer ist als die Länge des Mantelteils (12).

2. Antriebsrolle nach Anspruch 1, **dadurch gekennzeichnet, dass** das Mantelteil (12) und/oder der Kern (14) aus einer Aluminiumlegierung bestehen.

3. Antriebsrolle nach Anspruch 1, **dadurch gekennzeichnet, dass** das Mantelteil (12) und/oder der Kern (14) aus Kunststoff bestehen.

4. Antriebsrolle nach einem der vorhergehenden Ansprüche, **dadurch gekennzeichnet, dass** das Mantelteil (12) auf seinem Außenumfang mit einer Profilierung (24) versehen ist.

5. Antriebsrolle nach einem der vorhergehenden Ansprüche, **dadurch gekennzeichnet, dass** der Kern (14) auf seinem Außenumfang mit einem Verbindungsprofil (26) versehen ist.

6. Antriebsrolle nach einem der vorhergehenden Ansprüche, **dadurch gekennzeichnet, dass** die Länge des Kerns (14) weniger als 50% der Länge des Mantelteils (12) beträgt.

7. Antriebsrolle nach Anspruch 6, **dadurch gekennzeichnet, dass** der Kern (14) exzentrisch innerhalb des Mantelteils (12) angeordnet ist.

8. Antriebsrolle nach einem der vorhergehenden Ansprüche, **dadurch gekennzeichnet, dass** das Mantelteil (12) zumindest abschnittsweise eloxiert ist.

9. Verfahren zur Herstellung einer Antriebsrolle (10) für einen Rangierantrieb (2) nach einem der vorhergehenden Ansprüche mittels der folgenden Schritte:
- ein hohlzylindrisches Strangpressprofil wird abgelängt, so dass ein Mantelteil (12) der Antriebsrolle (10) erhalten wird;
- in das Innere des Mantelteils (12) wird ein Kern (14) so eingebracht, dass er drehfest mit dem Mantelteil (12) verbunden ist.

10. Verfahren nach Anspruch 9, **dadurch gekennzeichnet, dass** der Kern (14) durch Ablängen eines zweiten Strangpressprofils hergestellt wird.

11. Verfahren nach Anspruch 9 oder Anspruch 10, **dadurch gekennzeichnet, dass** der Kern (14) in das Mantelteil (12) eingepresst wird und solche Abmessungen relativ zum Inneren des Mantelteils (12) hat, dass sich eine Presspassung ergibt.

12. Verfahren nach einem der Ansprüche 9 und 10, **dadurch gekennzeichnet, dass** das Mantelteil (12) erwärmt und anschließend der Kern (14) in das Innere des Mantelteils (12) eingebracht wird.

## Claims

1. A drive roller (10) for a maneuvering drive (2), comprising a hollow cylindrical shell part (12) and a core (14) which is arranged in the interior of the shell part (12) and connected thereto for joint rotation therewith, the shell part (12) being an extruded profile part, **characterized in that** the core (14) is an extruded profile part and **in that** the core (14) has an axial length that is at least 20% shorter than the length of the shell part (12).

2. The drive roller according to claim 1, **characterized in that** the shell part (12) and/or the core (14) are made of an aluminum alloy.

3. The drive roller according to claim 1, **characterized in that** the shell part (12) and/or the core (14) are made from a plastic material.

4. The drive roller according to any of the preceding claims, **characterized in that** the shell part (12) is provided with a profiling (24) on its outer periphery.

5. The drive roller according to any of the preceding claims, **characterized in that** the core (14) is provided with a connecting profile (26) on its outer periphery.

6. The drive roller according to any of the preceding claims, **characterized in that** the length of the core (14) amounts to less than 50% of the length of the shell part (12).

7. The drive roller according to claim 6, **characterized in that** the core (14) is arranged eccentrically within the shell part (12).

8. The drive roller according to any of the preceding claims, **characterized in that** the shell part (12) is anodized at least in sections.

9. A method of manufacturing a drive roller (10) for a maneuvering drive (2) according to any of the preceding claims by means of the following steps:
- cutting to length a hollow cylindrical extruded profile so that a shell part (12) of the drive roller (10) is obtained;
- inserting a core (14) into the interior of the shell part (12) such that it is connected to the shell part (12) for joint rotation therewith.

10. The method according to claim 9, **characterized in that** the core (14) is manufactured by cutting to length a second extruded profile.

11. The method according to claim 9 or claim 10, **characterized in that** the core (14) is pressed into the shell part (12) and has such dimensions relative to the interior of the shell part (12) that a press fit results.

12. The method according to either of claims 9 and 10, **characterized in that** the shell part (12) is heated and subsequently the core (14) is inserted into the interior of the shell part (12).

## Revendications

1. Rouleau d'entraînement (10) pour un entraînement de manoeuvre (2), présentant une pièce enveloppe (12) cylindrique creuse et un noyau (14) qui est agencé à l'intérieur de la pièce enveloppe (12) et qui est relié solidaire en rotation à celle-ci, la pièce enveloppe (12) étant une pièce profilée extrudée, **caractérisé en ce que** le noyau (14) est une pièce profilée extrudée et **en ce que** le noyau (14) présente une longueur axiale qui est au moins de 20% inférieure à la longueur de la pièce enveloppe (12).

2. Rouleau d'entraînement selon la revendication 1, **caractérisé en ce que** la pièce enveloppe (12) et/ou le noyau (14) est réalisé(e)/sont réalisés en un alliage d'aluminium.

3. Rouleau d'entraînement selon la revendication 1, **caractérisé en ce que** la pièce enveloppe (12) et/ou le noyau (14) est réalisé(e)/sont réalisés en matière plastique.

4. Rouleau d'entraînement selon l'une des revendications précédentes, **caractérisé en ce que** sur sa périphérie extérieure, la pièce enveloppe (12) est pourvue d'un profilage (24).

5. Rouleau d'entraînement selon l'une des revendications précédentes, **caractérisé en ce que** sur sa périphérie extérieure, le noyau (14) est pourvu d'un profil de raccordement (26).

6. Rouleau d'entraînement selon l'une des revendications précédentes, **caractérisé en ce que** la longueur du noyau (14) est inférieure à 50% de la longueur de la pièce enveloppe (12).

7. Rouleau d'entraînement selon la revendication 6, **caractérisé en ce que** le noyau (14) est agencé de manière excentrique au sein de la pièce enveloppe (12).

8. Rouleau d'entraînement selon l'une des revendications précédentes, **caractérisé en ce que** la pièce enveloppe (12) est oxydée électrolytiquement au moins par tronçons.

9. Procédé de fabrication d'un rouleau d'entraînement (10) pour un entraînement de manoeuvre (2) selon l'une des revendications précédentes au moyen des étapes suivantes :
- un profil extrudé cylindrique creux est coupé à longueur de manière à obtenir une pièce enveloppe (12) du rouleau d'entraînement (10) ;
- un noyau (14) est inséré à l'intérieur de la pièce enveloppe (12) de manière à être relié solidaire en rotation à la pièce enveloppe (12).

10. Procédé selon la revendication 9, **caractérisé en ce que** le noyau (14) est réalisé en coupant un deuxième profil extrudé à longueur.

11. Procédé selon la revendication 9 ou la revendication 10, **caractérisé en ce que** le noyau (14) est pressé dans la pièce enveloppe (12) et présente de telles dimensions par rapport à l'intérieur de la pièce enveloppe (12) qu'il en résulte un ajustage serré.

12. Procédé selon l'une des revendications 9 et 10, **caractérisé en ce que** la pièce enveloppe (12) est chauffée et **en ce que** le noyau (14) est ensuite inséré à l'intérieur de la pièce enveloppe (12).
